# EUROPEAN PATENT SPECIFICATION

(11) **EP 1 844 664 B1**
(45) Date of publication and mention of the grant of the patent: **02.12.2009**
(21) Application number: 06425252.1
(22) Date of filing: 10.04.2006
(51) Int. Cl.: A23L 1/164, A23L 1/10, A23L 1/302, A23L 1/30

(54) **A food preparation in the form of a bar, containing functional ingredients (vitamins C and E, catechins) for preventing degenerative phenomena caused by oxidizing agents**
Nahrungsmittelriegel enthaltend funktionelle Zutaten (Vitamin C und E, Catechine) zur Verhinderung von Degenerationphänomenen, die durch Oxidationsmitteln verursacht werden
Préparation alimentaire sous forme de barre comprenant des ingrédients fonctionnels (vitamines C et E, catéchines) pour prévenir les phénomènes dégénératifs dûs aux agents oxidants.

(43) Date of publication of application: 17.10.2007
(73) Proprietor: Barilla G. e R. Fratelli S.p.A., 43100 Parma (IT)
(72) Inventor: De Albertis, Pietro, 43022 Montechiarugolo (IT); Melegari, Camilla, 43100 Parma (IT)
(74) Representative: Ferreccio, Rinaldo

(56) References cited:
- US-A- 4 451 488
- US-A- 5 612 074
- US-A- 6 054 128
- US-A1- 2004 013 707
- US-A1- 2005 031 737
- M PINELO ET AL: "Effect of bubbling nitrogen and pulsed flow on the antiradical activity of grape residues" JOURNAL OF FOOD ENGINEERING, vol. 73, 2006, pages 269-275,

## Description

### Field of application

The present invention generally refers to the field of food and dietary industry.

In particular, the invention concerns a cereal-based food preparation in the form of a ready-to-eat bar, containing functional ingredients capable of exerting a beneficial effect on the health of an individual, preventing degenerative phenomena caused by oxidative agents. The invention moreover regards a process for the production of such food preparation.

### Prior art

It has been known for several decades that the damage which a living organism suffers over time would be due to the accumulation of the so-called free radicals, which carry out a powerful oxidizing action, harmful for nearly all components of the organism.

The free radicals are unstable molecules, which chemically react with any molecular structure they encounter in the organism; they are held responsible for or in any case connected with various diseases, such as for example atherosclerosis, hypertension, ictus, Alzheimer's disease, Parkinson's disease, cataracts, retinitis pigmentosa, arthritis and perhaps also cancer.

The free radicals are formed in the mitochondria, wherein the oxygen is used for producing energy, because oxygen is not entirely consumed but, in part, forms these unstable molecules.

The free radical that is produced in greatest quantities is the superoxide anion O₂-, which can react with the hydrogen peroxide and form the dangerous hydroxyl radical OH-. Other radicals which form in the organism are the following: NO-, NO₂-, O₂+.

The free radicals are continually formed and their production is increased in conditions of stress, exposure to UV (sun) radiation, high calorie diet or in intense physical activity.

In the young organism, free radicals are effectively buffered but, as time goes by, elimination of the free radicals becomes less effective and the organism enters a condition of oxidative stress, and an aggression of various molecules and cellular structures, such as DNA, chromosomes, mitochondria and membranes, by the free radicals takes place.

The polyunsaturated fats and phospholipids are particularly vulnerable to the oxidative stress, which causes for example the conversion of the phosphatidylcholine into lysophosphatidylcholine and oxidizes the apoprotein B100 of the LDLs, making it unrecognizable to the receptors. The oxidated lipoproteins LDLs cause vasoconstriction, increased leucocytes adhesion , and platelet aggregation, which constitutes the initial step of arteriosclerosis.

One aid in the reduction of the free radicals is provided by various molecules of plant origin, such as vitamins, bioflavonoids and pigments. Plants exposed for many hours to the action of air and light have in fact developed defence systems for protecting their DNA, sugars, fats and proteins against oxidation and against free radicals; these include tocopherols, which are found for example in vegetable oils, in green leaves, isoprenes, which are found for example in peppers, apricots and broccoli, anthocyanin pigments, which are found in intense or dark red colored fruit; and polyphenols, which are found in strawberries, onions and citrus fruit.

A regular and abundant consumption of fruits and vegetables can undoubtedly be of benefit in the fight against the free radicals and is indeed recommended by nutritionists. This consumption can be advantageously accompanied by the intake of the abovementioned active substances in the form of dietary preparations (extracts, tablets, capsules etc.) or preferably incorporated in foods which are consumed on a daily basis.

A composition is known, for example from patent EP 1 328 268, for pharmaceutical or dietary use with antioxidant activity, in capsule form, comprising a combination of catechin and quercetin and other active substances, such as for example Vitamin E acetate and Vitamin C.

The patent US 6 054 128 describes formulations of dietary supplements comprising at least one vitamin chosen from among Vitamin B6, Vitamin B12 and folic acid, selenium, an antioxidant such as e.g. Vitamin C, Vitamin E and beta-carotene, and a bioflavonoid, such as for example rutin, quercetin or catechin. These formations can be in tablet or capsule form or they can also be incorporated in food bars.

US patent application No. 2004/0013707 (King et al.) discloses an alertness bar comprising carbohydrate including galactose, fat, protein, caffeine and optional further ingredients wherein the ratio of carbohydrate to protein is in the range of 2:1 to 4:1 by weight and wherein the fat includes an effective quantity of phospholipids selected from: phosphatidyl choline and phosphatidyl serine and mixtures thereof.

US patent No. 5,612,074 (Leach) describes a non-cooked food bar having dietary fibre, non-animal protein, simple and complex carbohydrates, sugars, antioxidants and lecithin, that is fortified with additional ingredients.

US patent application No. 2005/0031737 (Lines et al.) relates to a composition containing quercetin, vitamin B1, vitamin B2, vitamin B3, vitamin B6, vitamin B12, vitamin C, caffeine, epigallocatechin gallate, epicatechin, epicatechin gallate, epigallocatechin, and polypheron E.

US patent No. 4,451,488 (Cook et al.) describes a shelf stable, intermediate moisture, food bar having a chewy and soft texture with good taste.

To ensure a constant and continued intake of the above-mentioned anti-free radical active substances, their administration should be included through foods of daily consumption, rather than by means of capsules or tablets. Cereal bars constitute an ideal food carrier for such administration, as they meet the taste of most consumers, can be easily stored and are suited for consumption also outside the home environment,as they are easy to carry.

Nevertheless, the benefits coming from the addition of the above-mentioned active substances-to a bar may be of no avail if attention is not given to the nutritional characteristics of the bar's basic ingredients. In other words, the bar must be nutritionally balanced with respect to its glucid, protein and lipid composition.

### Summary of the invention

The problem underlying the present invention was that of making available a cereal-based bar which is nutritionally balanced with respect to its glucid, lipid and protein components, and containing a mixture of active substances suitable for countering the damaging action of free radicals on the organism.

A similar problem was solved, according to the invention, by a food preparation in the form of a bar, which is based on cereals and contains, in percentages by weight based on the total weight of the bar, a quantity of lipids not higher than 18% and a quantity of monosaccharides and disaccharides not higher than 33%, and which further containins 0.20-0.40% Vitamin C, 0.10-0.20% Vitamin E and 0.10-0.20% catechins.

Preferably, the quantity of Vitamin C is in the range of 0.25-0.30%, the quantity of Vitamin E is in the range of 0.12-0.16% and the quantity of catechins is in the range of 0.13-0.17%.

Vitamin C can be a synthesized ascorbic acid but preferably consists of an ascorbic acid of natural origin and advantageously extracted from a plant extract rich in Vitamin C, such as for example an extract of acerola with 50% Vitamin C.

Vitamin E can consist of d-alpha-tocopherol or its esters, in particular tocopherol acetate, or of mixtures of tocopherols of natural origin.

The catechins consist of green tea extracts.

The food preparation according to the present invention further contains a natural source of polyphenols, composed of pieces of cocoa beans and/or a natural source of antocyanin pigments, composed of dehydrated cranberries. Both the cocoa beans and the dehydrated cranberries have been shown to synergistically potentiate the anti-free radical activity exerted by the Vitamin C, Vitamin E and catechin mixture.

Moreover, the antocyanins contained in the cranberry (Vaccinium vitis idea) have a documented antitumoral action.

The cocoa beans are very rich in flavonoids (up to 10% by weight), which exert a strong antioxidant effect, in particular if they are combined with the catechins.

The pieces of cocoa bean are contained in the bar according to the invention in a quantity of 3-9%, advantageously 4-7%, by weight based on the total weight of the bar.

The dehydrated cranberry is contained in a quantity which varies from 5 to 15%, advantageously 8-12%, by weight based on the total weight of the bar.

The bar according to the invention is of the so-called "chewy" type, which is obtained by means of mixing operations with the aid of binding agents, rolling and cooling, without oven baking or toasting operations.

The cereals, which represent the basic ingredient of the bar, can be in the form of flakes of various cereals, such as corn, oat, wheat, barley etc., or puffed kernels, such as puffed rice, wheat, barley etc. The cereals preferably constitute 30-50% by weight based on the total weight of the bar.

Various sugary ingredients may be used as binders, such as for example glucose or fructose syrup, honey, sucrose etc.

Preferably, the bar according to the invention is of the "muesli" type and further contains one or more ingredients selected from hazelnuts, almonds, walnuts and similar dried fruits rich in polyunsaturated fatty acids, in a total quantity preferably in the range of 8-16% by weight based on the total weight of the bar.

Other optional ingredients of the bar according to the invention are selected from the following: chocolate, sunflower seeds, sultana raisins and other dehydrated fruits.

It is possible to add a moderate quantity of fats to improve the consistency of the bar and to give it a rounder taste; fats suitable for such a purpose can be selected among cocoa butter, margarine and non-hydrogenated vegetable fats.

The bar according to the present invention is produced by a process which comprises the steps of
a) preparing 55-65 parts by weight of a homogeneous mixture of puffed or flaked cereals and at least one ingredient selected among dehydrated cranberry, in a quantity comprised between 7·7 and 27.3%, and cocoa beans in pieces, in a quantity comprised between 4·6 and 13.8% by weight based on the total weight of the mixture, and optional additional particulate ingredients;
b) preparing 35-45 parts by weight of a binding fluid mixture based on ·monosaccharides and disaccharides, kept under stirring under a nitrogen flow, at a temperature of 60-80°C;
c) rapidly adding to the aforesaid binding fluid mixture, under nitrogen flow and under stirring, Vitamin C, Vitamin E and catechins in quantities such to obtain the following percentages by weight based on the weight of the final binding fluid mixture: 0.45-1.15% Vitamin C, 0.22-0.58% Vitamin E, 0.22-0.58% catechins;
d) mixing the aforesaid homogeneous cereal mixture with said binding fluid mixture, thus obtaining a dough which is subjected to conventional steps of lamination by means of rollers, cooling and finally cutting into bars, which are sent to packaging.

The monosaccharides and disaccharides preferably contained in the aforesaid binding mixture are sucrose and glucose syrup (at different D.E.).

The step of rapid addition of the vitamins and the catechins in step c) preferably lasts no more than 4 minutes and advantageously about 2 minutes, to preserve as much as possible the antioxidant power of the active substances.

### Detailed description of the invention

The bar according to the present invention will be further described by making reference to two examples provided by way of illustration and not of limitation.

### EXAMPLE 1

| Fruit Bar | |
|---|---|
| Puffed rice and puffed wheat | 22.00 |
| Confectioner's sugar | 13.00 |
| Toasted flaked oats | 10.00 |
| Dehydrated cranberries | 10.00 |
| High maltose glucose syrup | 10.00 |
| Split almonds | 7.50 |
| Toasted hazelnut crumbs | 5.50 |
| Glycerol | 5.00 |
| Sultana raisins | 5.00 |
| Malt extract | 3.50 |
| Margarine | 3.00 |
| Sunflower seeds | 4.00 |
| Natural aroma | 0.50 |
| Green tea extract¹ | 0.15 |
| Acerola extract 50% Vitamin C | 0.55 |
| Vitamin E acetate² | 0.30 |

The above reported values are percentages by weight based on the total weight of the final bar.
1) The green tea extract contained 95% epigallocatechin gallate.
2) It is a preparation of powdered Vitamin E acetate, supported on SiO₂ and containing 500 I.U. of Vitamin E / g.

The bar was prepared in the following manner

First, the following particulate ingredients were uniformly mixed: puffed rice and puffed wheat, toasted flaked oats, dehydrated cranberries, split almonds, toasted hazelnut crumbs, sultana raisins and sunflower seeds.

A fluid binding mixture was separately prepared, mixing the following ingredients inside a tank at 70°C for a time of about 5 minutes: confectioner's sugar, high maltose glucose syrup, glycerol, liquid malt extract, margarine, soy lecithin and natural aroma.

The fluid mixture thus obtained was pumped into a second tank, designed for a residence time of no more than 30 minutes and maintained at a constant temperature of to 70°C, subjected to the action of a mechanical agitator in the absence of air and under nitrogen.

Finally, the Teavigo green tea extract, the acerola extract and the Vitamine E acetate (Vitapherole EP-500®) are added and mixed with the fluid mixture for a period of about 2 minutes.

The final fluid mixture is then volumetrically metered always under nitrogen into a continuous mixer, into which the abovementioned homogeneous particulate ingredient mixture also flows in a metered manner.

A homogeneous dough is obtained at the exit of the mixer and is continuously metered on a production line comprising the following steps:
- formation of a continuous strand of dough by means of the action of two superimposed calibration rollers;
- calibration through an additional pair of rollers;
- forming into strips by means of a suitable grooved forming roller;
- cooling at a temperature which varies from 5-12°C;
- longitudinal cutting of the strips;
- diverging of the strips;
- transverse cutting of the strips into bars;
- packaging.

### EXAMPLE 2

| Cocoa Bar | |
|---|---|
| Chocolate corn flakes | 30.00 |
| Toasted flaked oats | 12.00 |
| Confectioner's sugar | 12.00 |
| High maltose glucose syrup | 12.00 |
| Toasted hazelnut crumbs | 11.00 |
| Cocoa beans in pieces | 6.00 |
| Non-diastased Malt extract | 5.00 |
| Glycerol | 4.00 |
| Margarine | 4.00 |
| Powdered chocolate | 2.00 |
| Soy lecithin powder | 0.80 |
| Chocolate aroma | 0.20 |
| Green tea extract¹ | 0.16 |
| Acerola extract 50% Vitamin C | 0.56 |
| Vitamin E acetate² | 0.28 |

| | |
|---|---|
| 1) and 2): see example 1. | |

The bar was prepared in an analogous manner to that described for example 1.

The mixture of particulate ingredients comprised chocolate corn flakes, toasted flaked oats and cocoa beans in pieces while the fluid binding mixture comprised confectioner's sugar, high maltose glucose syrup, glycerol, non-diastased malt extract, margarine, soy lecithin, chocolate aroma and powdered chocolate.

The addition of the three active substances to the binding fluid mixture, like all the other operating steps, were conducted under the same conditions described for example 1.

## Claims

1. Cereal-based food preparation in the form of a bar containing, in percentages by weight based on the total weight of the bar, a quantity of lipids not higher than 18% and a quantity of monosaccharides and disaccharides not higher than 33%, and further containing 0.20-0.40% Vitamin C, 0.10-0.20% Vitamin E and 0.10-0.20% catechins, wherein said catechins consist of a purified green tea extract, and at least one ingredient selected among cocoa beans in pieces and dehydrated cranberry in quantities of 3 to 9% and 5 to 15%, respectively.

2. Food preparation according to claim 1, wherein the quantity of Vitamin C is comprised between 0.25 and 0.30%, the quantity of Vitamin E is comprised between 0.12 and 0.16%, and the quantity of catechins is comprised between 0.13 and 0.17%.

3. Food preparation according to any one of the preceding claims, wherein said Vitamin C is of natural origin.

4. Food preparation according to any one of the preceding claims, further containing one or more ingredients selected from hazelnuts, almonds, walnuts and similar dried fruits, in a total quantity comprised between 8 and 16% by weight based on the total weight of the bar.

5. Process for the production of a food preparation according to any one of the preceding claims, comprising the steps of:
a) preparing 55-65 parts by weight of a homogeneous mixture of puffed cereals or cereal flakes and at least one ingredient selected among dehydrated cranberry, in a quantity comprised between 7.7 and 27.3%, and cocoa beans in pieces, in a quantity comprised between 4.6 and 13.8% by weight based on the total weight of the mixture;
b) preparing 35-45 parts by weight of a monosaccharide- and disaccharide-based fluid binding mixture, with stirring under a nitrogen flow at a temperature of 60-80°C;
c) rapidly adding to said fluid binding mixture, under nitrogen flow and under stirring, Vitamin C, Vitamin E and catechins in quantities such to obtain the following percentages by weight based on the weight of the final fluid binding mixture: 0.45-1.15% Vitamin C, 0.22-0.58% Vitamin E, 0.22-0.58% catechins;
d) mixing said homogenous cereal mixture with said fluid binding mixture, thus obtaining a dough, which is subjected to conventional steps of lamination by means of rollers, cooling and finally cutting into bars, which are sent on to packaging;

6. Process according to claim 5, wherein said step c) of rapidly adding said vitamins lasts no more than 4 minutes, preferably about 2 minutes.

## Patentansprüche

1. Nahrungsmittelzubereitung auf der Basis von Cerealien und in Form eines Riegels, die in Gewichtsprozentanteilen bezogen auf das Gesamtgewicht des Riegels eine Menge an Fetten von nicht mehr als 18% und eine Menge an Monosacchariden und Disacchariden von nicht mehr als 33% enthält, und darüber hinaus 0,20 bis 0,40% Vitamin C, 0,10 bis 0,20% Vitamin E und 0,10 bis 0,20% Katechine, wobei die Katechine aus einem gereinigten Grünteeextrakt bestehen, sowie zumindest eine Zutat enthält, die aus stückigen Kakaobohnen und dehydrierten Moosbeeren in Mengen von 3 bis 9% bzw. 5 bis 15% ausgewählt ist.

2. Nahrungsmittelzubereitung nach Anspruch 1, wobei die Menge an Vitamin C zwischen 0,25 und 0,30%, die Menge an Vitamin E zwischen 0,12 und 0,16% und die Menge der Katechine zwischen 0,13 und 0,17% liegt.

3. Nahrungsmittelzubereitung nach einem der vorhergehenden Ansprüche, wobei das Vitamin C natürlichen Ursprungs ist.

4. Nahrungsmittelzubereitung nach einem der vorhergehenden Ansprüche, darüber hinaus eine oder mehrere Zutaten enthaltend, die aus Haselnüssen, Mandeln, Walnüssen und ähnlichen Trockenfrüchten ausgewählt ist bzw. sind, und zwar in einer Gesamtmenge, die bezogen auf das Gesamtgewicht des Riegels zwischen 8 und 16 Gew.-% liegt.

5. Verfahren zur Herstellung einer Nahrungsmittelzubereitung nach einem der vorhergehenden Ansprüche, die Schritte umfassend:
a) Zubereiten von 55 bis 65 Gewichtsteilen einer homogenen Mischung aus gepufften Cerealien oder Cerealienflocken und mindestens einer Zutat, die bezogen auf das Gesamtgewicht der Mischung aus dehydrierten Moosbeeren in einer Menge zwischen 7,7 und 27,3 Gew.-% und stückigen Kakaobohnen in einer Menge zwischen 4,6 und 13,8 Gew.-% ausgewählt ist;
b) Zubereiten von 35 bis 45 Gewichtsteilen einer Flüssigkeit bindenden Mischung auf der Basis von Monosacchariden und Disacchariden unter Rühren unter einem Stickstoffstrom bei einer Temperatur von 60 bis 80°C;
c) schnelle Zugabe, zu der Flüssigkeit bindenden Mischung unter einem Stickstoffstrom und unter Rühren, des Vitamins C, Vitamins E und der Katechine in solchen Mengen, dass die folgenden Gewichtsprozentanteile bezogen auf das Gewicht der sich schließlich ergebenden, Flüssigkeit bindenden Mischung erhalten werden: 0,45 bis 1,15% Vitamin C, 0,22 bis 0,58% Vitamin E, 0,22 bis 0,58% Katechine;
d) Vermischen der homogenen Cerealienmischung mit der Flüssigkeit bindenden Mischung, womit ein Teig erhalten wird, der herkömmlichen Schritten der Schichtbildung mittels Walzen, des Kühlens und schließlich des Schneidens zu Riegeln unterzogen wird, die dann zum Verpacken weiterbefördert werden.

6. Nahrungsmittelzubereitung nach Anspruch 5, wobei der Schritt c) der schnellen Zugabe der Vitamine nicht länger als vier Minuten, vorzugsweise etwa 2 Minuten dauert.

## Revendications

1. Préparation alimentaire à base de céréales sous la forme d'une barre contenant, suivant des pourcentages en poids sur la base du poids total de la barre, une proportion de lipides qui n'est pas supérieure à 18 % et une proportion de monosaccharides et de disaccharides qui n'est pas supérieure à 33 %, et contenant en outre 0,20 à 0,40 % de vitamine C, 0,10 à 0,20 % de vitamine E et 0,10 à 0,20 % de catéchines, où lesdites catéchines sont constituées d'un extrait de thé vert purifié, et au moins un ingrédient sélectionné parmi des graines de cacao en morceaux et de la canneberge déshydratée suivant des proportions de 3 à 9 % et de 5 à 15 %, respectivement.

2. Préparation alimentaire selon la revendication 1, dans laquelle la proportion de vitamine C est comprise entre 0,25 et 0,30 %, la proportion de vitamine E est comprise entre 0,12 et 0,16 % et la proportion de catéchines est comprise entre 0,13 et 0,17 %.

3. Préparation alimentaire selon l'une quelconque des revendications précédentes, dans laquelle ladite vitamine C est d'origine naturelle.

4. Préparation alimentaire selon l'une quelconque des revendications précédentes, contenant en outre un ou plusieurs ingrédients sélectionnés parmi les noisettes, les amandes, les noix et des fruits secs similaires, suivant une proportion totale comprise entre 8 et 16 % en poids sur la base du poids total de la barre.

5. Procédé de production d'une préparation alimentaire selon l'une quelconque des revendications précédentes, comprenant les étapes consistant à :
a) préparer 55 à 65 parties en poids d'un mélange homogène constitué de céréales gonflées ou de flocons de céréales et d'au moins un ingrédient sélectionné parmi de la canneberge déshydratée, suivant une proportion comprise entre 7,7 et 27,3 %, et des graines de cacao en morceaux, suivant une proportion comprise entre 4,6 et 13,8 % en poids sur la base du poids total du mélange;
b) préparer 35 à 45 parties en poids d'un mélange liant fluide à base de monosaccharides et de disaccharides, tout en agitant sous un flux d'azote à une température de 60 à 80 ° C,
c) ajouter rapidement audit mélange liant fluide, sous un écoulement d'azote et sous agitation, de la vitamine C, de la vitamine E et des catéchines suivant des quantités permettant d'obtenir les pourcentages en poids suivants sur la base du poids du mélange liant fluide final : 0,45 à 1,15 % de vitamine C, 0,22 à 0,58 % de vitamine E, 0,22 à 0,58 % de catéchines,
d) mélanger ledit mélange de céréales homogène avec ledit mélange liant fluide, pour obtenir ainsi une pâte, qui est soumise à des étapes classiques de division au moyen de rouleaux, de refroidissement et finalement de coupe pour obtenir des barres, qui sont envoyées vers un conditionnement.

6. Procédé selon la revendication 5, dans lequel ladite étape c) consistant à ajouter rapidement lesdites vitamines ne dure pas plus de 4 minutes, de préférence environ 2 minutes.
